# EUROPEAN PATENT APPLICATION

(11) **EP 1 672 811 A1**
(43) Date of publication of application: **21.06.2006**
(21) Application number: 06005473.1
(22) Date of filing: 14.03.2000
(51) Int. Cl.: H04B 3/54, H04L 25/02

(54) **Single-cable, transmission device for signals and power supply of a surveillance system**

(62) Divisional of application: 00105283.6
(71) Applicant: Biwave Technologies, Taipei, Taiwan (CN)
(72) Inventor: Liu, Yen-Szu, Taipei (TW)
(74) Representative: Rüger, Barthelt & Abel Patentanwälte

(57) **Abstract**

The present invention provides a single-cable transmission device for signals and a power supply of a surveillance system, which only requires a single cable to transmit various signals and a power supply; which transmits signals in a carrier manner, allowing longer-distance transmission; which transmits signals in a frequency division manner, allowing bi-directional transmission, A power-supply-voltage/output-load status display is further provided, thereby facilitating a user to directly find the cause of a failure so as to eliminate the failure promptly.

## Description

### BACKGROUND OF THE INVENTION

The present Invention relates to a transmission device for signals via cables, and more particularly to a single-cable transmission device for signals and a power supply of a surveillance system.

In current surveillance systems, taking a unidirectional surveillance system for an example, base band signals such as video signals, audio signals, control signals, etc, and a power supply between cameras at remote side and monitors at local side are typically transmitted by use of many cables (for example, coaxial cables), respectively. However, such a transmission manner has a number of defects: (1) requiring plural cables, making it difficult to install the system and thus increasing system cost; (2) requiring additional repeaters for longer-distance transmission due to gradual decrease in signal intensity under base band transmission with longer-distance transmission; (3) compounding the problems resulting from the above defects (1) and (2) when the system is to be expanded to a bi-directional one; and (4) generally not easy to directly find whether the power supply or the load (for example, the camera) is out of order when the remote side which receives the power supply from the local side fails, even though professionals have to take advantage of proper instruments or equipment for assistance to find the cause of the failure so as to eliminate it, not to mention common consumers by DIY.

EP-A-0 271 969 describes a multiplex transmission system for transmitting video, audio and/or control signals along with DC power from a local device to a remote device via a telephone communication cable. At the local device a carrier is frequency-modulated with a video signal and a further carrier is frequency-modulated with audio and/or control signals, and the multiplex carriers are superimposed on a DC power before being output to the cable. At the remote device filter means are provided for separating the DC power from the multiplex carriers, as well as means for demultiplexing and demodulating the multiplex signals. Control means in both devices work together to keep the DC voltage at the remote device constant regardless of the difference of the cable length. In an embodiment, the audio, control and video signals are bidirectionally transmitted by frequency-division multiplex.

JP 06303602 discloses a multiplex communication interface device comprising indoor and outdoor modulators, demodulators and directional coupling circuits enabling a bidirectional transmission of audio and video signals via a single communication line. During the signal transmission a power supply section at the indoor side simultaneously supplies power to the video camera at the outdoor side via said line.

### SUMMARY OF THE INVENTION

In view thereof, the present invention provides an improved single-cable transmission device for signals and a power supply of a surveillance system, which can solve the problems encountered by the above prior art surveillance system techniques.

One object of the present invention is to provide a transmission device, which only requires a single cable to transmit various signals and a power supply, thereby making the system installation convenient, decreasing system cost, and facilitating common consumers to use by DIY.

Another object of the present invention is to provide a transmission device, which transmits signals in a carrier manner, allowing longer-distance transmission.

Still another object of the present invention is to provide a transmission device, which transmits signals in a frequency division manner, allowing bi-directional transmission, and thus facilitating operation drills and improving friendliness with operators.

Yet another object of the present invention is to provide a transmission device, which is equipped with a power-supply-voltage/output-load status display, thereby facilitating a user to directly find the cause of a failure so as to eliminate the failure promptly, and thus saving repair time,and enabling common consumers to use by DIY.

The invention is defined by the features of claim 1 and 26, respectively. Further embodiments are defined in the depending claims,

According to one embodiment of the present invention, the innovative single-cable transmission device for signals and a power supply of a surveillance system comprises a remote device, said remote device having a first modulator for transforming a first set of base band signals inputted externally into a first modulated carrier signal, and having a first filter module for receiving said first modulated carrier signal and a power supply inputted from said single cable, and for separating said first modulated carrier signal from said power supply through different frequency bands, and then outputting said separated first modulated carrier signal and power supply, respectively, wherein said inputted first modulated carrier signal is applied to said single cable.

According to another embodiment of the present invention, the innovative single-cable transmission device for signals and a power supply of a surveillance system comprises a local device, said local device having a second filter module for receiving said first modulated carrier signal inputted from said single cable and receiving a power supply inputted externally, and for separating said first modulated carrier signal from said power supply through different frequency bands, and then outputting said separated first modulated carrier signal and power supply, respectively, wherein said outputted power supply is applied to said single cable, and having a first demodulator for transforming said first modulated carrier signal outputted from said second filter module into said first set of base band signals.

According to a further embodiment of the present invention, the first filter module of the remote device of the innovative single-cable transmission device for signals and a power supply of a surveillance system further receives a second modulated carrier signal inputted from said single cable and separates said second modulated carrier signal from said first modulated carrier signal and said power supply through different frequency bands, and then outputs said separated second modulated carrier signal; and said remote device further comprises a second demodulator for transforming said second modulated carrier signal outputted from said first filter module into a second set of base band signals.

According to another embodiment of the present invention, the local device of the innovative single-cable transmission device for signals and a power supply of a surveillance system comprises a second modulator for transforming a second set of base band signals inputted externally into a second modulated carrier signal; a second filter module for receiving said first modulated carrier signal inputted from said single cable, said second modulated carrier signal from said second modulator, and a power supply inputted externally, and for separating said first modulated carrier signal, said second modulated carrier signal, and said power supply through different frequency bands, and then outputting said separated first modulated carrier signal, second modulated carrier and power supply, respectively, wherein said outputted second modulated carrier signal and power supply are applied to said single cable; and a first demodulator for receiving said first modulated carrier signal outputted from said second filter module and transforming said first modulated carrier signal into said first set of base band signals.

According to one aspect of the present invention, the remote device of the innovative single-cable transmission device for signals and a power supply of a surveillance system comprises a power-supply-voltage/ output-load status display connected between the power supply outputted from said first filter module and external devices for detecting the operation status of the power supply voltage and the external device loads.

According to another aspect of the present invention, the innovative single-cable transmission device for signals and a power supply of a surveillance system receives a power supply at said remote device rather than at said local device as mentioned above, and the power-supply-voltage/ output-load status display is included in the local device rather than in the remote device as mentioned above.

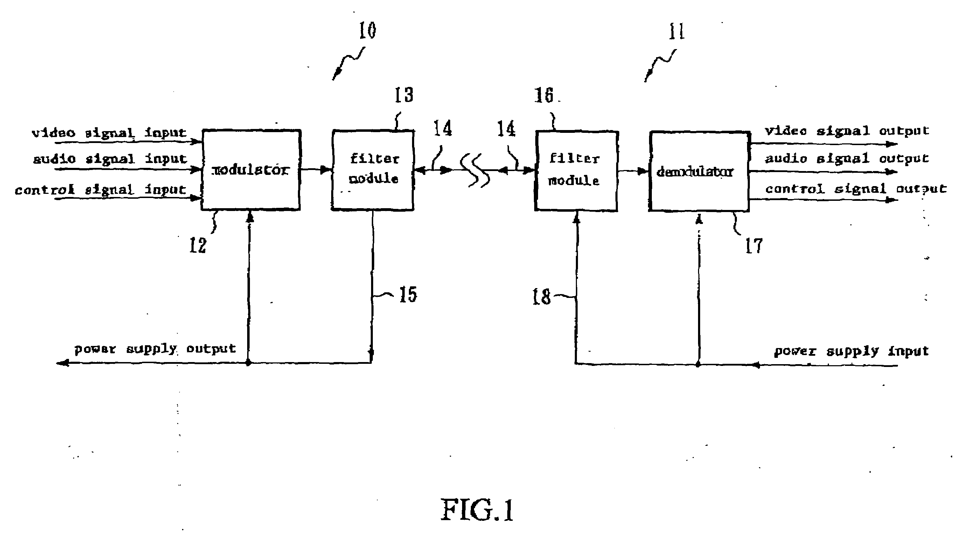

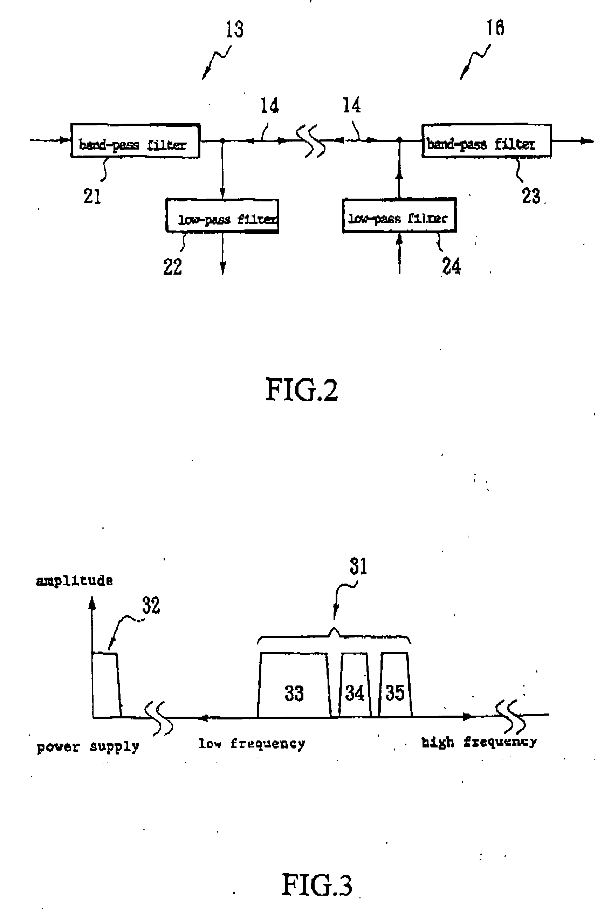

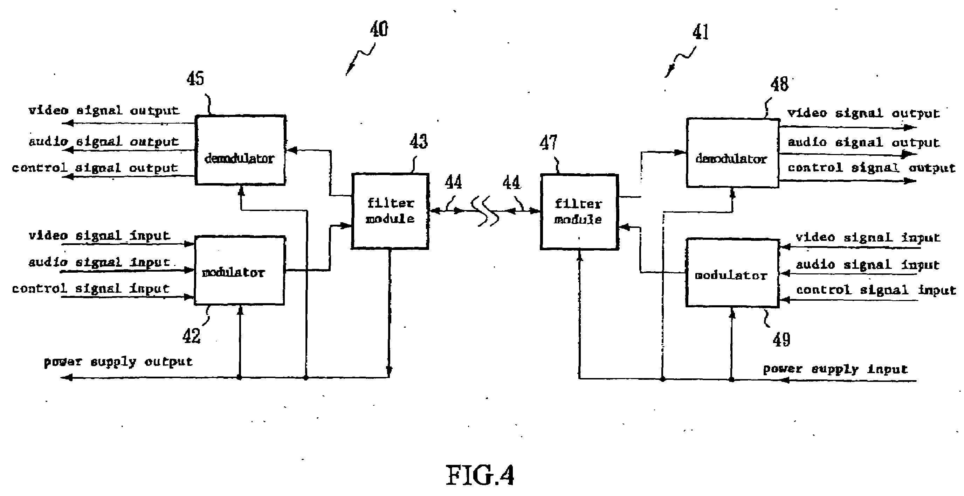

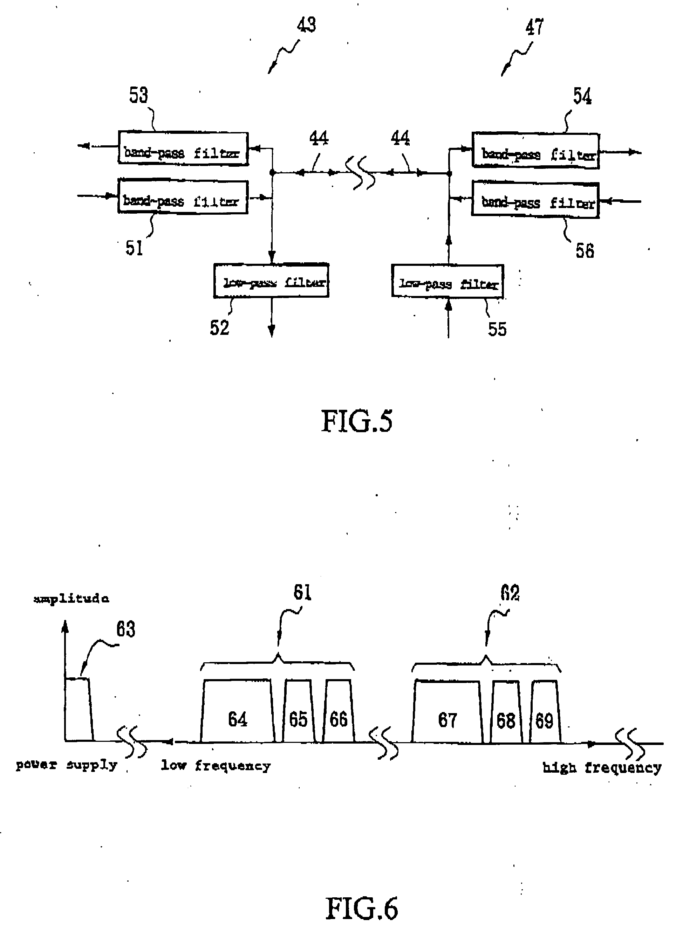

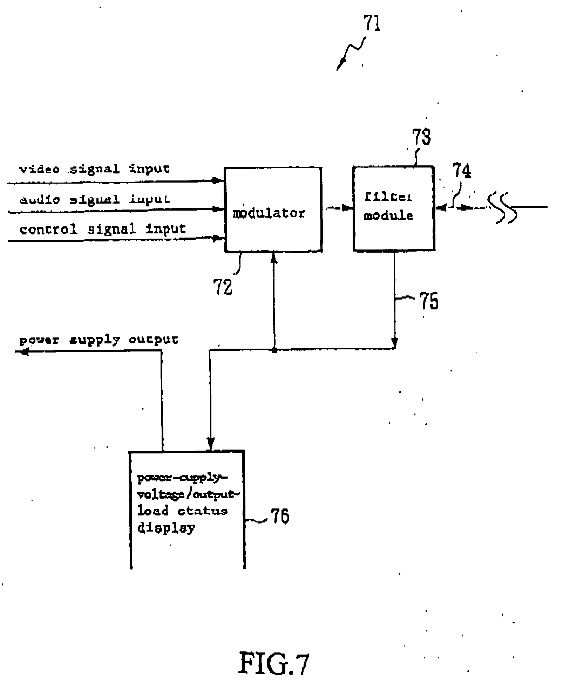

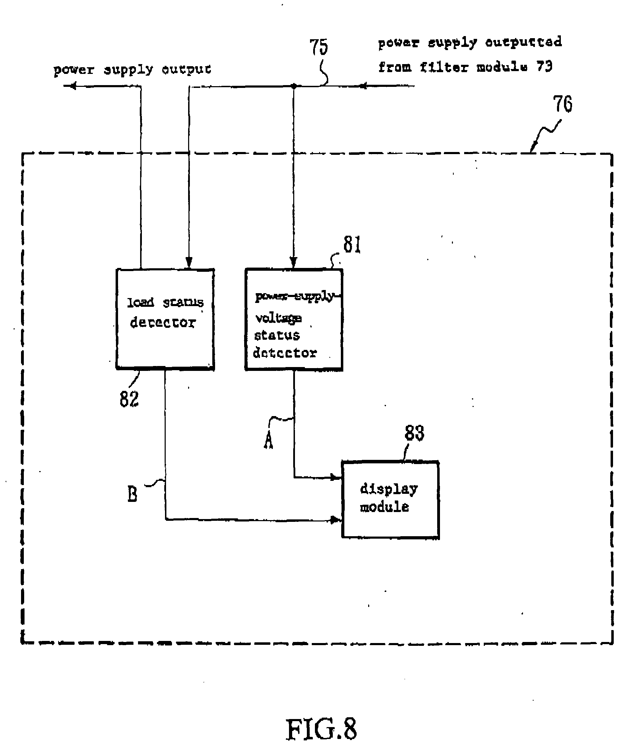

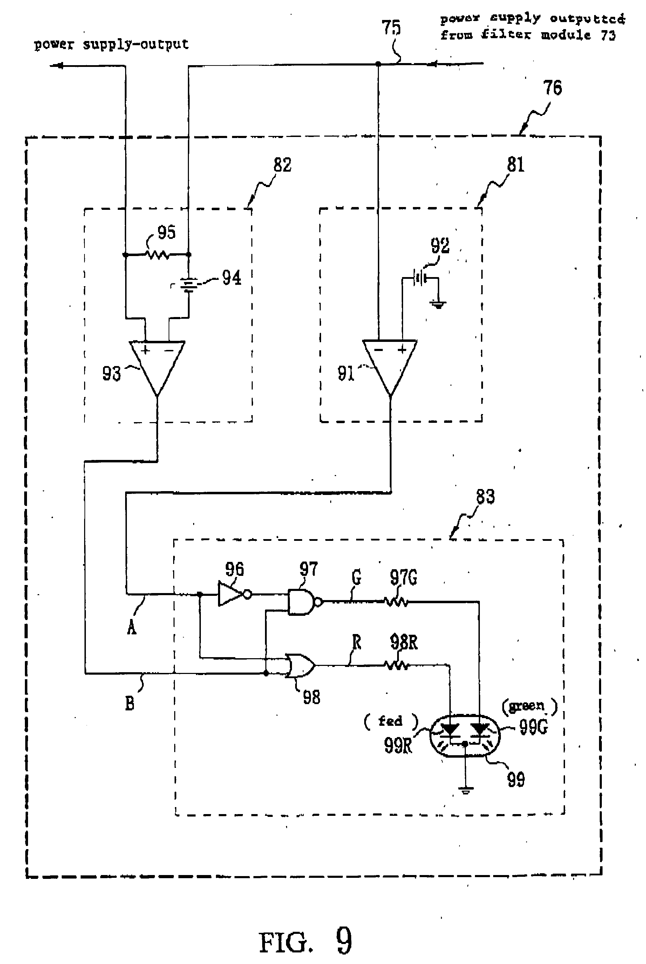

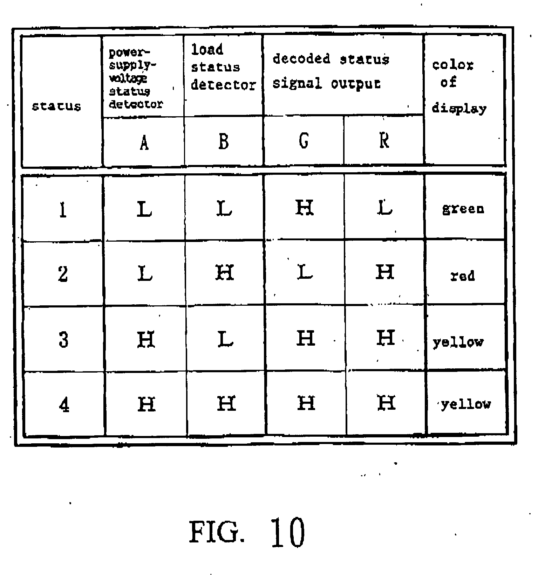

## Claims

1. A single-cable transmission device for signals and a power supply of a surveillance system comprising:
a remote device (10, 40, 71) having:
a first modulator (12, 42, 72) for transforming a first set of base band signals inputted externally into a first modulated carrier signal;
a first filter module (13, 43, 73) for receiving said first modulated carrier signal and a power supply inputted from said single cable (14, 44, 74), and separating said first modulated carrier signal from said power supply through different frequency bands (31, 32, 61,63), and then outputting said separated first modulated carrier signal and power supply, respectively, wherein said outputted first modulated carrier signal is applied to said single cable (14, 44, 74); and
a power-supply-voltage/output-load status display (76) connected to the power supply outputted from said first filter module for detecting the operation status of the power supply voltage and a load connected to the status display.

2. The single-cable transmission device as claimed in claim 1, further comprising a local device (11, 41), said local device having:
a second filter module (16, 47) for receiving said first modulated carrier signal inputted from said single cable and a power supply inputted externally, and separating said first modulated carrier signal from said power supply through different frequency bands (31, 32, 61, 63), and then outputting said separated first modulated carrier signal and power supply, respectively,
wherein said outputted power supply is applied to said single cable (14, 44, 74); and
a first demodulator (17, 48) for receiving said first modulated carrier signal outputted from said second filter module (16, 47), and transforming said first modulated carrier signal into said first set of base band signals.

3. The single-cable transmission device as claimed in claim 1, wherein said first filter module (43) of said remote device (40) further receives a second modulated carrier signal inputted from said single cable (44), and separates said second modulated carrier signal from said first modulated carrier signal and said power supply through different frequency bands (61, 62, 63), and then outputs said separated second modulated carrier signal; and said remote device (40) further includes a second demodulator (45) for receiving said second modulated carrier signal outputted from said first filter module (43), and transforming said second modulated carrier signal into a second set of base band signals.

4. The single-cable transmission device as claimed in claim 3, further comprising a local device (41), said local device having:
a second modulator (49) for transforming a second set of base band signals inputted externally into a second modulated carrier signal;
a second filter module (47) for receiving said first modulated carrier signal inputted from said single cable (44), said second modulated carrier signal from said second modulator (49), and a power supply inputted externally, and separating said first modulated carrier signal, said second modulated carrier signal, and said power supply from each other through different frequency bands, and then outputting said separated first modulated carrier signal, second modulated carrier and power supply, respectively, wherein said outputted second modulated carrier signal and power supply are applied to said single cable (44); and
a first demodulator (48) for receiving said first modulated carrier signal outputted from said second filter module (47) and transforming said first modulated carrier signal into said first set of base band signals.

5. The single cable transmission device as claimed in claim 1, wherein said power supply outputted from said first filter module is applied to said first modulator (12, 42, 72).

6. The single-cable transmission device as claimed in claim 2, wherein said first demodulator (17, 48) receives the power supply inputted externally.

7. The single-cable transmission device as claimed in claim'3, wherein said power supply outputted from said first filter module (13, 43, 73) is applied to said first modulator (12, 42, 72) and said second demodulator (45).

8. The single-cable transmission device as claimed in Claim 4, wherein said first demodulator (48) and said second modulator (49) receive the power supply inputted externally.

9. The single-cable transmission device as claimed in any of claims 1 to 8, wherein said cable (14, 44, 74) is a coaxial cable.

10. The single-cable transmission device as claimed in any of claims 1 to 8, wherein said base band signals includes a video signal, an audio signal and a control signal.

11. The single-cable transmission device as claimed in any of claims 1 to 8, wherein said power supply is a DC power supply.

12. The single-cable transmission device as claimed in any of claims 1 to 8, wherein said power supply is an AC power supply.

13. The single-cable transmission device as claimed in claim 11, wherein said power supply has a voltage range varying with the length of said single cable.

14. The single-cable transmission device as claimed in claim 12, wherein said power supply has a voltage range varying with the length of said single cable.

15. The single-cable transmission device as claimed in claim 12, wherein said power supply outputted from said first filter module (13, 43, 73) is rectified and then applied to said first modulator (12, 42, 72) and said status display (76).

16. The single-cable transmission device as claimed in claim 12, wherein said first demodulator (48) receives said power supply inputted externally after rectified.

17. The single-cable transmission device as claimed in claim 12, wherein said power supply outputted from said first filter module (43) is rectified and then applied to said first modulator (42), said second demodulator (45) and said status display (76).

18. The single-cable transmission device as claimed in claim 12, wherein said first demodulator (48) and said second modulator (49) receive said power supply inputted externally after rectified.

19. The single-cable transmission device as claimed in any of claims 1 to 8, wherein said modulation is performed in a coherent AM manner.

20. The single-cable transmission device as claimed in claim 19, wherein said demodulation is performed in an AM detection manner.

21. The single-cable transmission device as claimed in any of claims 1 to 8, wherein said modulation is performed in a non-coherent manner, and said modulator is further provided with an adder to integrate modulated carrier signals.

22. The single-cable transmission device as claimed in claim 21, wherein said demodulation is performed with phase-locked loop (PLL).

23. The single-cable transmission device as claimed in any of claims 1 to 8, wherein said first filter module (13, 43, 73) and said second filter module (16, 47) include at least one band-pass filter (21, 23; 51, 56) and one low-pass filter (22, 24, 52, 55).

24. The single-cable transmission device as claimed in claim 1, wherein said power-supply-voltage/output-load status display (76) includes a power-supply-voltage status detector (81), a load status detector (82), and a display module (83).

25. The single-cable transmission device as claimed in claim 24, wherein said power-supply-voltage status detector (81) and said load status detector (82) include at least one operational amplifier (91, 93) and one reference voltage, and said display module (83) includes a single decoder (96, 97, 98) and an LED display (99).

26. A single-cable transmission device for signals and a power supply of a surveillance system comprising:
a remote device (40) having:
a first modulator (42) for transforming a first set of base band signals inputted externally into a first modulated carrier signal;
a first filter module (43) for receiving said first modulated carrier signal and a power supply inputted externally, and separating said first modulated carrier signal from said power supply through different frequency bands (61, 63), and then outputting said separated first modulated carrier signal and power supply to said single cable (44); and a local device (41) having:
a second filter module (47) for receiving said first modulated carrier signal and said power supply inputted from said single cable (44), and separating said first modulated carrier signal from said power supply through different frequency bands (62, 63), and then outputting said separated first modulated carrier signal and power supply, respectively;
a first demodulator (48) for receiving said first modulated carrier signal outputted from said second filter (47) module, and transforming said first modulated carrier signal into said first set of base band signals; and
a power-supply-voltage/output-load status display (76) connected to the power supply outputted from said second filter module for detecting the operation status of the power supply voltage and a load connected to the status display (76).

27. The single cable transmission device as claimed in claim 26, wherein said first filter module (43) of said remote device (40) further receives a second modulated carrier signal inputted from said single cable (44), and separates said second modulated carrier signal from said first modulated carrier signal and said power supply through different frequency bands (61, 63), and then outputs said separated second modulated carrier signal; and said remote device (40) further includes a second demodulator (45) for receiving said second modulated carrier signal outputted from said first filter module (43), and transforming said second modulated carrier signal into a second set of base band signals (62).

28. The single cable transmission device as claimed in claim 27, wherein said local device (41) further comprises a second modulator (49) for transforming a second set of base band signals inputted externally into a second mediated carrier signal; and said second filter module (47) further receives said second modulated carrier signal from said second modulator (49), and separates said second modulated carrier signal from said first modulated carrier signal and said power supply through different frequency bands (61, 62,63), and then outputs said separated second modulated carrier signal wherein said outputted second modulated carrier signal is applied to said single cable (44).

29. The single-cable transmission device as claimed in claim 26, wherein said first modulator (42) receives said power supply inputted external.

30. The single-cable transmission device as claimed in claim 26, wherein said power supply outputted from said second filter module (42) is applied to said first demodulator (48).

31. The single-cable transmission device as claimed in claim 27, wherein said first modulator (42) and said second demodulator receive said power supply inputted externally.

32. The single-cable transmission device as claimed in claim 28, wherein said power supply outputted from said second filter module (47) is applied to said first demodulator (48), and said second modulator (49).

33. The single-cable transmission device as claimed in any of claims 26 to 32, wherein said cable (44) is a coaxial cable.

34. The single-cable transmission device as claimed in any of claims 26 to 32, wherein said base band signals includes a video signal, an audio signal and a control signal.

35. The single-cable transmission device as claimed in any of claims 26 to 32, wherein said power supply is a DC power supply.

36. The single-cable transmission device as claimed in any of claims 26 to 32, wherein said power supply is an AC power supply.

37. The single-cable transmission device as claimed in claim 35, wherein said power supply has a voltage range varying with the length of said single cable (44)

38. The single-cable transmission device as claimed in claim 36, wherein said power supply has a voltage range varying with the length of said single cable (44)

39. The single-cable transmission device as claimed in claim 36, wherein said first modulator receives said power supply inputted externally after rectified.

40. The single-cable transmission device as claimed in claim 36, wherein said power supply outputted from said second filter module is rectified and then applied to said first demodulator (48).

41. The single-cable transmission device as claimed in claim 36, wherein said first modulator (42) and said second demodulator (45) receive said power supply inputted externally after rectified.

42. The single-cable transmission device as claimed in claim 36, wherein said power supply outputted from said second filter module (47) is rectified and then applied to said first demodulator (48), said second modulator (49) and said status display (76).

43. The single-cable transmission device as claimed in any of claims 26 to 32, wherein said modulation is performed in a coherent AM manner.

44. The single-cable transmission device as claimed in claim 43, wherein said demodulation is performed in an AM detection manner.

45. The single-cable transmission device as claimed in any of claims 26 to 32, wherein said modulation is performed in a non-coherent manner, and said modulator is further provided with an adder to integrate modulated carrier signals.

46. The single-cable transmission device as claimed in claim 45, wherein said demodulation is performed with phase-locked loop (PLL).

47. The single-cable transmission device as claimed in any of claims 27 to 34, wherein said first filter module (43) and said second filter module (47) include at least one band-pass filter (51, 53, 54, 56) and one low-pass filter (52, 55).

48. The single-cable transmission device as claimed in claim 26, wherein said power-supply-voltage/output-load status display (76) includes a power-supply-voltage status detector (81), a load status detector (82), and a display module (83).

49. The single-cable transmission device as claimed in claim 48, wherein said power-supply-voltage status detector (81) and said load status detector (82) include at least one operational amplifier (91, 93) and one reference voltage, and said display module (83) includes a single decoder (96, 97, 98) and an LED display (99).
